# EUROPÄISCHE PATENTSCHRIFT

(11) **EP 2 026 149 B1**
(45) Veröffentlichungstag und Bekanntmachung des Hinweises auf die Patenterteilung: **12.06.2013**
(21) Anmeldenummer: 08104969.4
(22) Anmeldetag: 06.08.2008
(51) Int. Cl.: G05B 19/042

(54) **Hausgerät und Verfahren zum Betreiben eines Hausgeräts**
Household device and method for operating same
Appareil ménager et procédé de fonctionnement d'un appareil ménager

(30) Priorität: 10.08.2007 DE 102007037879
(43) Veröffentlichungstag der Anmeldung: 18.02.2009
(73) Patentinhaber: BSH Bosch und Siemens Hausgeräte GmbH, 81739 München (DE)
(72) Erfinder: Großer, Jörg, 93077 Bad Abbach (DE); Kobl, Bernhard, 93051 Regensburg (DE)

(56) Entgegenhaltungen:
- EP-A1- 1 276 033
- DE-A1- 10 340 627
- DE-A1-102005 059 319

## Beschreibung

Die Erfindung betrifft ein Hausgerät nach dem Oberbegriff von Patentanspruch 1 sowie ein Verfahren zum Betreiben eines Hausgeräts.

Moderne Hausgeräte können einen hohen Funktionsumfang haben, wobei das Zusammenspiel zwischen elektromechanischen Bauteilen und Steuerungselektronik außerordentlich vielschichtig sein kann. Es ist wohl bekannt, dass mit zunehmender Komplexität eines Produkts auch die Wahrscheinlichkeit für Fehlfunktionen und Fehlbedienung steigt. Typischerweise umfasst die Steuerungselektronik eines Hausgeräts persistente, wiederbeschreibbare Speicherelemente, die als EEPROM- oder Flash-Bausteine realisiert sind. Die zum Betrieb des Hausgeräts notwendige Software, als auch weitere Daten, beispielsweise während des Betriebs ermittelte Daten, werden in diese Bausteine gespeichert.

Aus der DE 103 40 627 A1 ist eine Sende-/Empfangs-Einrichtung bekannt, wobei ein Hausgeräte-Steuerprogramm von der Sende-/Empfangs-Einrichtung zu einer externen Steuer-Vorrichtung übertragen wird und mittels dieser eine Steuerung des Hausgeräts erfolgt. Ferner ist im Gerät mindestens ein Sensor zur Erfassung von Zustandsinformation über das Gerät vorgesehen, wobei die erfassten Sensordaten an die externe Steuer-Vorrichtung übertragen werden. Das Steuerprogramm und die Sensordaten werden in entsprechende Speicher abgelegt.

Als nachteilig an diesem Hausgerät ist anzusehen, dass die Steuereinrichtung eine hohe Komplexität aufweist und, dass die Betriebssicherheit der Steuereinrichtung infolge fehlerhaften Überschreibens von Speicherinhalten gefährdet sein kann.

Der Erfindung liegt daher die Aufgabe zugrunde, ein Hausgerät zu schaffen, welches bezüglich Betriebssicherheit dem Stand der Technik überlegen ist und bezüglich der Steuereinrichtung einfacher aufgebaut ist.

Diese Aufgabe wird erfindungsgemäß durch ein Hausgerät mit den Merkmalen gemäß Patentanspruch 1 und durch ein Verfahren gemäß Anspruch 7 gelöst.

Vorteilhafte Ausführungsformen der Erfindung mit zweckmäßigen Weiterbildungen sind in den Unteransprüchen angegeben.

Das erfindungsgemäße Hausgerät umfasst somit eine Steuereinrichtung und einen Speicher mit zumindest einem ersten Speicherbereich und einem zweiten Speicherbereich, wobei der Zugriff auf den ersten Speicherbereich ausschließlich lesend und der Zugriff auf den zweiten Speicherbereich lesend und schreibend ist. Bei Inbetriebnahme des Hausgeräts liest die Steuereinrichtung aus einem der beiden Speicherbereiche ein Initialisierungsprogramm und führt es anschließend aus, wobei die Steuereinrichtung während des Betriebs dessen Komponenten steuert. Das Initialisierungsprogramm umfasst eine Information über mindestens eine Blockadresse des ersten Speicherbereichs, wodurch festgelegt ist, dass der Zugriff auf den mit der Blockadresse korrespondierenden Block ausschließlich lesend ist. Die einzulesenden Blockadressen definieren praktisch denjenigen Speicherbereich, der im normalen Betrieb des Hausgeräts ausschließlich lesbar ist, d.h. weder überschrieben noch gelöscht werden darf. Somit kann der erste Speicherbereich sicherheitskritische Daten enthalten, die den Betrieb des Hausgeräts gewährleisten. Aufgrund des geschilderten Speicherzugriffs durch das im Allgemeinen als Bootloader realisierte Initialisierungsprogramm wird verhindert, dass ein versehentliches Löschen oder Überschreiben sicherheitskritischer Daten den Betrieb des Hausgeräts beeinträchtigen. Dies stellt einen erheblichen Beitrag zu einem stabilen, sicheren Betrieb des Hausgeräts dar.

Die Steuereinrichtung umfasst ein mit dem ersten der beiden Speicherbereiche gekoppeltes Datenmodell des Hausgeräts, sowie Mittel zum Durchführen von Messungen von Betriebsdaten des Hausgeräts. Hierbei besteht ein Zusammenhang zwischen gemessenen Betriebsdaten und dem Datenmodell und durch diesen Zusammenhang sind die Komponenten des Hausgeräts mittels der Steuereinrichtung steuerbar oder regelbar. Diese Mittel sind vorzugsweise Sensoren, die an diversen Komponenten des Hausgeräts angeordnet sind um beispielsweise Wassertemperatur, Wasserdurchfluss, Umdrehungsgeschwindigkeit der Wäschetrommel und elektrische Leitfähigkeit des Wassers zu messen. Die Messdaten stehen der Steuereinrichtung zur Verfügung.

Das Datenmodell umfasst eine Vielzahl von Daten, die das Hausgerät technisch beschreiben oder, die es kennzeichnen. Zu den letzteren gehören die Informationen zur Identität des Hausgeräts, umfassend Fertigungsdatum, Baureihe und Fertigungsort. Damit lässt sich das Gerät und sein Herstellungsprozess präzise identifizieren. Dies erleichtert in erheblichem Masse die Wartungs- und Reparaturarbeiten, sowie einen damit verbundenen effizienten Zugriff auf passende Ersatzteile. Das Datenmodell umfasst zugleich ein multivariates, lineares oder nichtlineares Modell als Ausdruck der Relation zwischen den Betriebsdaten, und/oder ein Look-Up-Table für die Toleranzen der Betriebsdaten. Damit ist ein Bezug zwischen gemessenen Betriebsdaten und unter optimalen Bedingungen ermittelten bzw. simulierten Betriebsdaten herstellbar. Dadurch ist eine Diagnose des aktiven Betriebszustands und darauf basierend eine effiziente Steuerung und erhöhte Betriebssicherheit des Hausgeräts möglich.

Das Hausgerät weist einen koppelbaren Speicherbaustein auf, wobei der Zugriff auf diesen Speicherbaustein ausschließlich lesend ist. Der Speicherbaustein ist, zum Auslesen von Initialisierungs- oder Identitätsinformationen, durch Bedienen eines Schalters an die Steuereinrichtung koppelbar. Der Schalter ist mittels sogenannten "Jumpern" realisierbar. Der Vorteil eines hardwaremäßigen Speicherschutzes als Alternative zur Software-Option mittels Initialisierungsprogramm liegt in der Festlegung des Schutzbereichs bereits im Fertigungsprozess und der damit verbundenenen zusätzlichen Sicherheit. Der hardwaremäßige Speicherschutz kann auch in Ergänzung zur Software-Option als weitere, zusätzliche Sicherheit hinzugenommen werden.

In einer vorteilhaften Ausführung der Erfindung ist der Speicher ein Flash-Speicher. Die Kosten dafür sind erheblich niedriger als die eines EPROMs, bei nahezu gleichem Funktionsumfang.

Eine Umsetzung des Initialisierungsprogramms als Bootloader ist besonders vorteilhaft für ein Programm, das bei Inbetriebnahme des Hausgeräts, bzw. der damit verbundenen Steuereinrichtung, von dieser lesbar und ausführbar ist. Eine alternative Umsetzung ist die, als Treiber.

Das erfindungsgemäße Betreiben eines eine Steuereinrichtung und einen Speicher mit zumindest einem ersten Speicherbereich und einem zweiten Speicherbereich umfassenden Hausgeräts erfolgt derart, dass die Steuereinrichtung auf einen ersten Speicherbereich ausschließlich lesend und auf einen zweiten Speicherbereich lesend und schreibend zugreift. Bei Inbetriebnahme des Hausgeräts liest die Steuereinrichtung ein Initialisierungsprogramm aus einem der beiden Speicherbereiche ein und führt es anschließend aus, wobei ein Steuern der Komponenten des Hausgeräts während des Betriebs eingeschlossen ist. Das Initialisierungsprogramm umfasst eine Information über mindestens eine Blockadresse des ersten Speicherbereichs, wodurch festgelegt ist, dass auf den mit der Blockadresse korrespondierenden Block ausschließlich lesend zugegriffen wird. Die Vorteile des erfindungsgemäßen Verfahrens entsprechen denen der genannten Vorrichtung.

Für das Betreiben des Hausgeräts ist ein Datenmodell erforderlich. Dieses umfasst technische Modelldaten des Hausgeräts, die das Steuerprogramm mit realen, im praktischen Einsatz gemessenen Betriebsdaten, vergleicht. Die Messungen werden, mit Mitteln zum Durchführen von Messungen von Betriebsdaten, vorzugsweise mit Sensoren, unter Anweisung des Steuerprogramms, durch das Hausgerät selbsttätig ausgeführt. Der Vergleich von gemessenen mit Soll-Daten stellt die Grundlage für eine Steuerung bzw. Regelung des Hausgeräts dar. Vornehmlich wird die unscharfe, sogenannte "fuzzy" Logik, und selbstlernende Systeme, beispielsweise neuronale Netze, eingesetzt. Auch eine Aktualisierung von Teilen des Datenmodels durch die Einbeziehung von Messdaten findet statt. Vorteilhafterweise ist durch Einsatz des Datenmodells eine umfassende Prüfung des Hausgerätezustands im laufenden Betrieb möglich, woraus eine verbesserte Betriebssicherheit resultiert.

Das Beschreiben des ersten Speicherbereichs, auf den die Steuereinrichtung nur lesend zugreift, findet außerhalb des Normalbetriebs nur durch ein externes Flashwerkzeug statt. Dieses greift lesend und schreibend auf alle Speicherbereiche zu. Typischerweise ist ein solches Flashwerkzeug durch ein auf einem an die Steuereinrichtung gekoppelten PC laufendes Flash-Programm, realisiert.

Das Betreiben des Hausgeräts umfasst grundsätzlich ein Schreiben der für den Betrieb benötigten Daten und Programme mittels des externen Flashwerkzeugs in den Speicher einerseits, sowie ein Lesen aus dem Speicher und Ausführen von Programmen andererseits. Somit werden folgende Schritte ausgeführt:
a) Einschalten des Hausgeräts,
b) einer der folgenden Schritte b1) und b2):
   b1) Schreiben des Datenmodells und/oder des Initialisierungsprogramms mittels des externen Flashwerkzeugs in den ersten Speicherbereich und/oder Schreiben des Steuerprogramms mittels des externen Flashwerkzeugs in den zweiten Speicherbereich, oder
   b2) Lesen und Ausführen des Initialisierungsprogramms durch die Steuereinrichtung und/oder Lesen und Ausführen des Steuerprogramms durch die Steuereinrichtung,
   und
c) Abschalten des Hausgeräts.

Die Erfindung stellt somit eine effiziente Möglichkeit dar, die Betriebssicherheit eines Hausgeräts zu verbessern. Die kompakte Realisierung der Steuereinrichtung durch onboard- Ausführen der zum Betrieb nötigen Programme hat auch eine verbesserte Wirtschaftlichkeit zur Folge.

Nachfolgend wird eine bevorzugte Ausführungsform der Erfindung unter Bezug auf die Zeichnungen beschrieben, in denen
- Fig. 1: ein Schaubild der Komponenten eines erfindungsgemäßen Hausgeräts mit Signalfluss zeigt, und
- Fig. 2: ein Ablaufdiagramm des erfindungsgemäßen Verfahrens zum Betreiben des Hausgeräts zeigt.

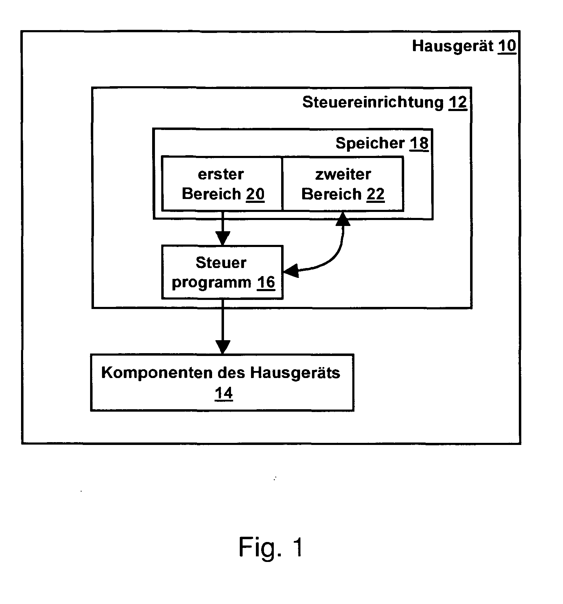

Fig. 1 zeigt schematisch ein Hausgerät 10, in dem eine Steuereinrichtung 12, sowie Komponenten des Hausgeräts 14 angeordnet sind. Die Steuereinrichtung 12 ist dazu ausgelegt, durch Ausführen eines Steuerprogramms 16 die Komponenten des Hausgeräts 14 zu steuern bzw. zu regeln. Das Steuerprogramm 16 greift auf einen Speicher 18 zu, der einen ersten Speicherbereich 20, auf den ausschließlich lesender Zugriff möglich ist, und einem zweiten Speicherbereich 22 umfasst, auf den lesender und schreibender Zugriff möglich ist.

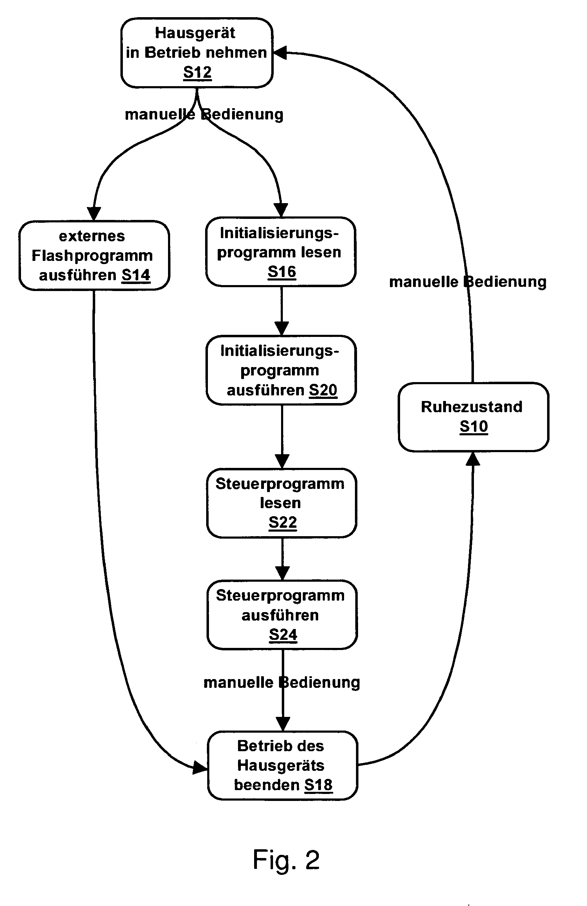

Im Folgenden wird das erfindungsgemäße Verfahren unter Bezug auf Fig. 2 als Funktionsweise der Komponenten im erfindungsgemäßen Hausgerät nach Fig. 1 beschrieben.

Der Normalzustand des Hausgeräts 10 ist der inaktive Ruhezustand (Schritt S10). Aus diesem Zustand heraus kann der Nutzer, durch manuelle Bedienung, das Hausgerät in Betrieb nehmen (Schritt S12). Nach Inbetriebnahme entscheidet er, ob er ein externes Flashprogramm (Schritt S14), oder ob er den normalen Betrieb ausführen will, dessen erster Schritt darin besteht, ein Initialisierungsprogramm zu lesen (Schritt S16).

Das Ausführen des externen Flashprogramms, durch Bedienen eines mit der Steuereinrichtung 12 gekoppelten PCs, wird durchgeführt, um die sicherheitskritischen Daten, umfassend das Initialisierungsprogramm und ein Datenmodell des Hausgeräts, in den ersten Speicherbereich 20 zu schreiben. Sofern das Datenmodell im Normalbetrieb des Hausgeräts durch das Steuerprogramm 16 zu aktualisieren ist, was einem partiellen Überschreibens des Datenmodells entspricht, werden entsprechende Teile des Datenmodells in den zweiten Speicherbereich 22 geschrieben. Ferner wird das Steuerprogramm 16 in den zweiten Speicherbereich geschrieben. Anschließend wird der Betrieb des Hausgeräts beendet (Schritt S18) und das Hausgerät geht in den Ruhezustand (Schritt S10) über.

Im Normalbetrieb des Hausgeräts 10 sind die ersten Schritte "Initialisierungsprogramm lesen" (Schritt S16) und "Initialisierungsprogramm ausführen" (Schritt S20). Beim Ausführen des Initialisierungsprogramms (Schritt S20) werden aus dem ersten Speicherbereich 20, der im Initialzustand aus gegebenenfalls nur einem Block besteht, die Blockadressen der mit dem ersten Speicherbereich 20 korrespondierenden Blöcke eingelesen. Mit dem Einlesen der genannten Blockadressen wird somit der erste Speicherbereich eindeutig festgelegt, wobei eine Änderung dieser Festlegung nur durch ein erneutes Ausführen des externen Flashprogramms (Schritt S14) möglich ist. Im Normalbetrieb des Hausgeräts 10 ist eine Änderung dieser Festlegung, bzw. ein Überschreiben oder Löschen der im ersten Speicherbereich 20 gespeicherten Daten nicht möglich. Hingegen ein Schreiben von Daten in den zweiten Speicherbereich 22, beispielsweise ein Überschreiben des dort gespeicherten Steuerprogramms 16, ist beim Ausführen des Initialisierungsprogramms möglich.

Im Normalbetrieb des Hausgeräts 10 führt die Steuereinrichtung 12 anschließend die Schritte "Steuerprogramm lesen" (Schritt S22) und "Steuerprogramm ausführen" (Schritt S24) aus. Beim Ausführen des Steuerprogramms 16 (Schritt S24) werden durch Sensoren gemessene Betriebsdaten gemessen und mit dem Datenmodell des Hausgeräts 10 in Bezug gesetzt. Darauf basierend findet eine Steuerung bzw. Regelung des Hausgeräts 10 statt. Schließlich kann der Nutzer, nach dem Ende des Steuerprogramms 10, durch manuelle Bedienung den Betrieb des Hausgeräts 10 beenden (Schritt S18), wonach das Hausgerät 10 in den Ruhezustand (Schritt S10) zurückkehrt.

## Patentansprüche

1. Hausgerät (10) mit
• einem Speicher (18), der zumindest einen ersten Speicherbereich (20) und einen zweiten Speicherbereich (22) umfasst, wobei der Zugriff auf den ersten Speicherbereich (20) ausschließlich lesend ist, der Zugriff auf den zweiten Speicherbereich (22) lesend und schreibend ist, und
• einer Steuereinrichtung (12), die bei Inbetriebnahme des Hausgeräts (10) aus einem der beiden Speicherbereiche (20 oder 22) ein Initialisierungsprogramm liest und anschließend ausführt, wobei die Steuereinrichtung (12) während des Betriebs dessen Komponenten (14) steuert, und wobei
• das Initialisierungsprogramm eine Information über mindestens eine Blockadresse des ersten Speicherbereichs (20) umfasst, wodurch festgelegt ist, dass der Zugriff auf den mit der Blockadresse korrespondierenden Block ausschließlich lesend ist.

2. Hausgerät (10) nach Anspruch 1,
**gekennzeichnet dadurch, dass**
die Steuereinrichtung (12) ein mit dem ersten der beiden Speicherbereiche (20) gekoppeltes Datenmodell des Hausgeräts (10), sowie Mittel zum Durchführen von Messungen von Betriebsdaten des Hausgeräts (10) umfasst, wobei ein Zusammenhang zwischen gemessenen Betriebsdaten und dem Datenmodell besteht und durch diesen Zusammenhang die Komponenten des Hausgeräts (10) mittels der Steuereinrichtung (12) steuerbar oder regelbar sind.

3. Hausgerät (10) nach Anspruch 1 oder 2,
**gekennzeichnet dadurch, dass**
das Datenmodell
• Informationen zur Identität des Hausgeräts (10), umfassend Fertigungsdatum, Baureihe und Fertigungsort,
• ein multivariates, lineares oder nichtlineares Modell als Ausdruck der Relation zwischen den Betriebsdaten, und/oder
• ein Look-Up-Table für die Toleranzen der Betriebsdaten
umfasst.

4. Hausgerät (10) nach einem der vorhergehenden Ansprüche,
**gekennzeichnet dadurch, dass**
das Hausgerät (10) einen koppelbaren Speicherbaustein aufweist, wobei der Zugriff auf diesen Speicherbaustein ausschließlich lesend ist und der Speicherbaustein durch Bedienen eines Schalters an die Steuereinrichtung (12), zum Auslesen von Initialisierungs- oder Identitätsinformationen, koppelbar ist.

5. Hausgerät (10) nach einem der vorhergehenden Ansprüche,
**gekennzeichnet dadurch, dass**
der Speicher (18) ein Flash-Speicher ist.

6. Hausgerät (10) nach einem der vorhergehenden Ansprüche,
**gekennzeichnet dadurch, dass**
das Initialisierungsprogramm ein Bootloader oder Treiber ist.

7. Verfahren zum Betreiben eines Hausgeräts (10), wobei das Hausgerät (10) eine Steuereinrichtung (12) und einen Speicher (18) mit zumindest einem ersten Speicherbereich (20) und einem zweiten Speicherbereich (22) umfasst, und wobei folgende Schritte ausgeführt werden:
a) auf einen ersten Speicherbereich (20) ausschließlich lesendes Zugreifen und auf einen zweiten Speicherbereich (22) lesendes und schreibendes Zugreifen und
b) bei Inbetriebnahme des Hausgeräts (10) Lesen eines Initialisierungsprogramms aus einem der beiden Speicherbereiche (20 oder 22) und anschließendes Ausführen des Initialisierungsprogramms, einschließlich Steuern der Komponenten des Hausgeräts (14) während des Betriebs, wobei das Initialisierungsprogramm eine Information über mindestens eine Blockadresse des ersten Speicherbereichs (20) umfasst, wodurch festgelegt ist, dass auf den mit der Blockadresse korrespondierenden Block ausschließlich lesend zugegriffen wird.

8. Verfahren nach Anspruch 7, wobei das Hausgerät (10) ein Datenmodell und Mittel zum Durchführen von Messungen von Betriebsdaten des Hausgeräts (10) nach Anspruch 2 umfasst, wobei
• die Steuereinrichtung (12) aus einem der zumindest zwei Speicherbereiche (20 oder 22) ein Steuerprogramm (16) einliest und anschließend ausführt, und
• das Steuerprogramm (16) einen Vergleich von gemessenen Daten mit Modelldaten und damit ein Steuern des Hausgeräts (10) ausführt.

9. Verfahren nach Anspruch 7, wobei ein externes Flashwerkzeug lesend und schreibend auf den ersten (20) und/oder den zweiten Speicherbereich (22) zugreift.

10. Verfahren nach einem der Ansprüche 7 oder 9, wobei folgende Schritte ausgeführt werden:
a) Einschalten des Hausgeräts (10),
b) einer der folgenden Schritte b1) und b2):
b1) Schreiben des Datenmodells und/oder des Initialisierungsprogramms mittels des externen Flashwerkzeugs in den ersten Speicherbereich (20) und/oder Schreiben des Steuerprogramms (16) mittels des externen Flashwerkzeugs in den zweiten Speicherbereich (22), oder
b2) Lesen und Ausführen des Initialisierungsprogramms durch die Steuereinrichtung (12) und/oder Lesen und Ausführen des Steuerprogramms (16) durch die Steuereinrichtung (12),
und
c) Abschalten des Hausgeräts (10).

## Claims

1. Domestic appliance with
• a memory (18), having at least one first memory area (20) and a second memory area (22), wherein access to the first memory area (20) is exclusively in read mode, access to the second memory area (22) is in read and write mode, and
• a control device (12) which upon operation of the domestic appliance (10) reads an initialisation program from one of the two memory areas (20 or 22) and subsequently executes said program, wherein the control device (12) controls its components (14) during operation, and wherein
• the initialisation program comprises information about a block address of the first memory area (20), which stipulates that access to the block corresponding to the block address is exclusively in read mode.

2. Domestic appliance (10) according to claim 1, **characterised in that** the control device (12) comprises a data model of the domestic appliance (10), and a means for performing measurements of operating data of the domestic appliance (10), wherein a relationship exists between measured operating data and the data model, and through this relationship the components of the domestic appliance (10) can be controlled or regulated by means of the control device (12).

3. Domestic appliance (10) according to claim 1 or 2, **characterised in that** the data model comprises
• information relating to the identity of the domestic appliance (10), comprising manufacturing data, model range and place of manufacture,
• a multivariate, liner or non-linear model as an expression of the relationship between the operating data, and/or
• a look-up table for the tolerances of the operating data.

4. Domestic appliance according to one of the preceding claims, **characterised in that** the domestic appliance (10) has a memory module which can be coupled, wherein access to this memory module is exclusively in read mode and the memory module can be coupled by operating a switch on the control device, in order to read initialisation or identity information.

5. Domestic appliance (10) according to one of the preceding claims, **characterised in that** the memory (18) is a flash memory.

6. Domestic appliance (10) according to one of the preceding claims, **characterised in that** the initialisation program is a boot loader or driver.

7. Method for the operation of a domestic appliance (10), wherein the domestic appliance (10) comprises a control device (12) and a memory (18) with at least a first memory area (20) and a second memory area (22), and wherein the following steps are performed:
a) Exclusively read access to a first memory area (20) and read and write access to a second memory area (22) and
b) upon putting the domestic appliance (10) into service, reading of an initialisation program from one of the two memory areas (20 or 22) and subsequent execution of an initialisation program, including controlling of the components of the domestic appliance (14) during its operation, wherein the initialisation program comprises information relating to at least one block address of the first memory area (20), by means of which it is stipulated that access to the block corresponding to the block address is exclusively in read mode.

8. Method according to claim 7, wherein the domestic appliance (10) comprises a data model and means for the execution of measurements of operating data of the domestic appliance (10) according to claim 2, wherein the control device reads in and subsequently executes a control program (16) from one of the at least two memory areas (20 or 22), and the control program (16) performs a comparison of measured data with model data, and thus performs control of the domestic appliance (10)

9. Method according to claim 7, wherein an external flash tool access in read and write mode on the first (20) and/or the second memory area (22).

10. Method according to one of the claims 7 or 9, wherein the following steps are executed:
a) switching-on of the domestic appliance (10),
b) one of the following steps b1) and b2):
b1) Writing of the data model and/or of the initialisation program by means of the external flash tool in the first memory area (20) and/or writing of the control program (16) by means of the external flash tool in the second memory area (22), or
b2) Reading and execution of the initialisation program by means of the control device (12) and/or reading and execution of the control program (16) by the control device (12),
and
c) switching-off of the domestic appliance (10).

## Revendications

1. Appareil ménager (10) comprenant
• une mémoire (18) qui comprend au moins une première zone de mémoire (20) et une deuxième zone de mémoire (22), l'accès à la première zone de mémoire (20) étant exclusivement par lecture, l'accès à la deuxième zone de mémoire (22) étant par lecture et écriture, et
• un dispositif de commande (12) qui, lors de la mise en service de l'appareil ménager (10), lit un programme d'initialisation à partir de l'une des deux zones de mémoire (20 ou 22) et l'exécute ensuite, le dispositif de commande (12) commandant les composants (14) de l'appareil ménager pendant le fonctionnement, et
• le programme d'initialisation comprenant une information concernant au moins une adresse de bloc de la première zone de mémoire (20), sur quoi il est déterminé que l'accès au bloc correspondant à l'adresse de bloc est uniquement par lecture.

2. Appareil ménager (10) selon la revendication 1,
**caractérisé en ce que**
le dispositif de commande (12) comprend un modèle de données de l'appareil ménager (10), couplé à la première des deux zones de mémoire (20), ainsi que des moyens pour exécuter des mesures de données d'exploitation de l'appareil ménager (10),
un rapport existant entre les données d'exploitation mesurées et le modèle de données et les composants de l'appareil ménager (10) étant commandables ou réglables au moyen du dispositif de commande (12) en raison de ce rapport.

3. Appareil ménager (10) selon la revendication 1 ou 2,
**caractérisé en ce que**
le modèle de données comprend
• des informations concernant l'identité de l'appareil ménager (10), comprenant la date de fabrication, la série et le lieu de fabrication,
• un modèle multivarié, linéaire ou non-linéaire, en tant qu'expression de la relation entre les données d'exploitation, et/ou
• une table de correspondance pour les tolérances des données d'exploitation.

4. Appareil ménager (10) selon l'une quelconque des revendications précédentes,
**caractérisé en ce que**
l'appareil ménager (10) présente un module de mémoire pouvant être couplé, l'accès à ce module de mémoire étant exclusivement par lecture et le module de mémoire pouvant être couplé au dispositif de commande (12), pour la lecture d'informations d'initialisation ou d'identité, par la commande d'un commutateur.

5. Appareil ménager (10) selon l'une quelconque des revendications précédentes,
**caractérisé en ce que**
la mémoire (18) est une mémoire flash.

6. Appareil ménager (10) selon l'une quelconque des revendications précédentes,
**caractérisé en ce que**
le programme d'initialisation est un chargeur d'amorçage ou un pilote de gestion.

7. Procédé de fonctionnement d'un appareil ménager (10), l'appareil ménager (10) comprenant un dispositif de commande (12) et une mémoire (18) comprenant au moins une première zone de mémoire (20) et une deuxième zone de mémoire (22), les étapes suivantes étant exécutées :
a) accès, exclusivement par lecture, à une première zone de mémoire (20) et accès par lecture et écriture à une deuxième zone de mémoire (22) et
b) à la mise en service de l'appareil ménager (10), lecture d'un programme d'initialisation à partir de l'une des deux zones de mémoire (20 ou 22) et exécution ensuite du programme d'initialisation, y compris la commande des composants (14) de l'appareil ménager pendant le fonctionnement, le programme d'initialisation comprenant une information concernant au moins une adresse de bloc de la première zone de mémoire (20), sur quoi il est déterminé que l'accès au bloc correspondant à l'adresse de bloc est uniquement par lecture.

8. Procédé selon la revendication 7, l'appareil ménager (10) comprenant un modèle de données et des moyens pour exécuter des mesures de données d'exploitation de l'appareil ménager (10) selon la revendication 2,
• le dispositif de commande (12) lisant un programme de commande (16) à partir de l'une des au moins deux zones de mémoire (20 ou 22) et l'exécutant ensuite, et
• le programme de commande (16) exécutant une comparaison de données mesurées avec les données du modèle et donc une commande de l'appareil ménager (10).

9. Procédé selon la revendication 7, un outil flash externe ayant accès, par lecture et par écriture, à la première zone de mémoire (20) et/ou à la deuxième zone de mémoire (22).

10. Procédé selon l'une quelconque des revendications 7 ou 9, les étapes suivantes étant exécutées :
a) mise sous tension de l'appareil ménager (10),
b) une des étapes suivantes b1) et b2) :
b1) écriture du modèle de données et/ou du programme d'initialisation dans la première zone de mémoire (20) au moyen de l'outil flash externe et/ou écriture du programme de commande (16) dans la deuxième zone de mémoire (22) au moyen de l'outil flash externe, ou
b2) lecture et exécution du programme d'initialisation par le dispositif de commande (12) et/ou lecture et exécution du programme de commande (16) par le dispositif de commande (12),
et
c) mise hors tension de l'appareil ménager (10).
